# EUROPÄISCHE PATENTANMELDUNG

(11) **EP 4 624 690 A1**
(43) Veröffentlichungstag der Anmeldung: **01.10.2025**
(21) Anmeldenummer: 24166342.6
(22) Anmeldetag: 26.03.2024
(51) Int. Cl.: E03F 5/22, E03F 7/04, E03C 1/122, E03C 1/288, F16K 15/03

(54) **VERTIKALER RÜCKSTAUVERSCHLUSS MIT SELBSTTÄTIG GESCHLOSSENER FALLKLAPPE**

(71) Anmelder: Kessel SE + Co. KG, 85101 Lenting (DE)
(72) Erfinder: Kessel, Bernhard, 85101 Lenting (DE)
(74) Vertreter: Grünecker Patent- und Rechtsanwälte PartG mbB

(57) **Zusammenfassung**

Die vorliegende Erfindung betrifft einen rohrartigen Rückstauverschluss für den vertikalen Einbau in ein Abwasserrohrgefälle, aufweisend einen Abwassereinlassstutzen und einen Abwasserauslassstutzen, wobei ein Abwasserdurchlasspfad des Rückstauverschlusses vom Abwassereinlassstutzen hin zum Abwasserauslassstutzen verläuft, eine schwenkbare Fallklappe, welche zwischen Abwassereinlassstutzen und Abwasserauslassstutzen mit einer Fallklappenöffnung dichtend zusammenspielt, und die Fallklappe einen Abwasserfluss in Richtung des Abwasserdurchlasspfades durch eine geöffnete Stellung erlaubt und entgegen der Richtung des Abwasserdurchlasspfades durch eine geschlossene Stellung sperrt, wobei die Fallklappe in einer vertikalen Einbauorientierung des Rückstauverschlusses in einer Normalstellung selbsttätig entgegen der Schwerkraftrichtung geschlossen ist und in einer Abwasserdurchlasssituation in Schwerkraftrichtung selbsttätig öffnet. Die Erfindung betrifft zudem ein zugehöriges Abwasserhebesystem.

## Beschreibung

Die vorliegende Erfindung betrifft einen Abwasserrückstauverschluss mit den Merkmalen des unabhängigen Anspruchs 1 sowie ein zugehöriges Abwasserhebesystem.

Die EP2177679A1 offenbart beispielsweise einen Rückstauverschluss, welcher auch für sehr verschmutzte Haushaltsabwässer, wie beispielsweise fäkalienhaltiges Abwasser, geeignet ist.

Insgesamt zeigt sich jedoch, dass viele gängige Rückstauverschlüsse Schwächen beim Durchleiten von besonders verschmutzten Abwässern haben, beispielsweise beim Durchleiten von fäkalienhaltigem Abwasser. Hierbei kann es sein, dass sich Schmutzteile an die beweglichen Schließteile des Rückstauverschlusses oder an die Schließdichtungen anhaften und die Funktionsfähigkeit dieser Teile und somit des Rückstauverschlusses behindern. Es werden deswegen konstruktiv aufwändige Vorkehrungen getroffen, die Funktion des Rückstauverschlusses im Rückstaufall zu verbessern beziehungsweise sicherzustellen.

Der vorliegenden Erfindung liegt die Aufgabe zugrunde, die Einsatzzuverlässigkeit eines Abwasserrückstauverschlusses zu verbessern und gleichzeitig den Rückstauverschluss nach Möglichkeit konstruktiv einfach zu gestalten.

Die vorliegende Erfindung schlägt einen rohrartigen Rückstauverschluss für den vertikalen Einbau in ein Abwasserrohrgefälle vor, aufweisend einen Abwassereinlassstutzen und einen Abwasserauslassstutzen, wobei ein Abwasserdurchlasspfad des Rückstauverschlusses vom Abwassereinlassstutzen hin zum Abwasserauslassstutzen verläuft, eine schwenkbare Fallklappe, welche zwischen Abwassereinlassstutzen und Abwasserauslassstutzen mit einer Fallklappenöffnung dichtend zusammenspielt, und die Fallklappe einen Abwasserfluss in Richtung des Abwasserdurchlasspfades durch eine geöffnete Stellung erlaubt und entgegen der Richtung des Abwasserdurchlasspfades durch eine geschlossene Stellung sperrt, wobei die Fallklappe in einer vertikalen Einbauorientierung des Rückstauverschlusses in einer Normalstellung selbsttätig entgegen der Schwerkraftrichtung geschlossen ist und in einer Abwasserdurchlasssituation in Schwerkraftrichtung selbsttätig öffnet.

Es hat sich überraschend gezeigt, dass eine erfindungsgemäße Kombination einer in Normalstellung entgegen der Schwerkraftrichtung selbsttätig geschlossen und in Schwerkraftrichtung selbsttätig öffnenden Fallklappe mit einer vertikalen Einbaubarkeit des Rückstauverschlusses einen besonders zuverlässigen Abwasserrückstauverschluss schafft. Hierbei hat sich gezeigt, dass der in einer Abwasserdurchlasssituation auf die in Normalstellung geschlossene Fallklappe treffende Abwasserstrom die Fallklappe sowie die Fallklappenöffnung reinigt und ein Anhaften von Verschmutzungsteilen an diese funktionsrelevanten Bauteile merklich reduziert und teils sogar verhindert. Die hierbei schwenkende Bewegung der Fallklappe im Abwasserstrom ist zudem fördernd für das reduzieren von funktionsbeeinträchtigenden Verschmutzungen an der Fallklappe und der Fallklappenöffnung.

Zusätzlich ermöglicht die vertikale Einbauorientierung die kinetische Energie des Abwassers zur effizienten Durchspülung des Rückstauverschlusses zu nutzen, was Schmutzablagerungen reduziert und die Einsatzzuverlässigkeit des Rückstauverschlusses zusätzlich erhöht.

Weiterhin ermöglicht die standardmäßig geschlossene Stellung der Fallklappe, dass sich in einer Rückstausituation unterhalb der geschlossenen Fallklappenöffnung zuverlässig ein Luftpolster ausbildet, was es ermöglicht, funktionsrelevante Teile des Rückstauverschlusses, wie die Fallklappe und die Fallklappenöffnung, so im Rückstauverschluss zu positionieren, dass der Pegel des Rückstauabwassers nicht in Kontakt mit diesen funktionsrelevanten Teilen gelangt.

Es hat sich gezeigt, dass ein erfindungsgemäßer Rückstauverschluss aufgrund der zuvor genannten Vorteile auch mit besonders problematischem Abwasser, wie beispielsweise fäkalienhaltigem Abwasser ("Schwarzwasser"), zuverlässig verwendet werden kann.

In einer optionalen Ausführungsform ist die Schwenkachse der Fallklappe so im Rückstauverschluss angeordnet ist, dass sich die Schwenkachse in einer Abwasserrückstausituation in einem sich zwischen der geschlossenen Fallklappenöffnung und dem Abwasserrückstaupegel ausgebildeten Luftpolster befindet.

Dies schützt die funktionsrelevante Schwenkachse vor Verschmutzung durch Rückstauabwasser und erhöht die Einsatzzuverlässigkeit.

In einer optionalen Ausführungsform ergibt sich die Position der Schwenkachse im Rückstauverschluss aus einer "worst-case"-Betrachtung, genauer aus dem physikalischen Zusammenhang des bei geschlossener Fallklappe im Rückstauverschluss auslassseitig bis zum Abwasserauslassstutzen verfügbaren Luftvolumens zum für den Rückstauverschluss zugelassenen maximalen Rückstaudruck. Die Schwenkachse liegt hierbei oberhalb des hieraus errechenbaren maximal möglichen Abwasserrückstaupegels.

In einer weiterhin optionalen Ausführungsform ist die Fallklappe so im Rückstauverschluss angeordnet ist, dass sich die Fallklappe in einer Abwasserrückstausituation in einem sich zwischen der geschlossenen Fallklappenöffnung und dem Abwasserrückstaupegel ausgebildeten Luftpolster befindet. Die oben genannte "worst-case"-Betrachtung gilt in einer optionalen Ausführungsform auch für die Anordnung der Fallklappe im Rückstauverschluss.

Dies schützt die funktionsrelevante Fallklappe vor Verschmutzung durch Rückstauabwasser und erhöht die Einsatzzuverlässigkeit.

In einer weiteren, optionalen Ausführungsform ist die Schwenkachse der Fallklappe in der vertikalen Einbauorientierung auslassseitig zur Fallklappenöffnung oberhalb eines tiefsten Punktes der Fallklappenöffnung angeordnet.

Sollte die Fallklappe in der Rückstausituation einmal wider Erwarten nicht dichtend schließen, so bietet diese Anordnung die Möglichkeit, dass die Schwenkachse dennoch in einem kleineren, verbleibenden Luftpolster nicht in Kontakt mit Rückstauabwasser gerät.

In einer zusätzlichen, optionalen Ausführungsform kann die Fallklappe als ein erster Hebelarm einer an der Schwenkachse gelagerten Wippe ausgebildet sein und ein Kraftspeicher an dem gegenüberliegenden zweiten Hebelarm die Fallklappe in der vertikalen Einbausituation selbsttätig in die Normalstellung drücken.

Dies erlaubt es, den Kraftspeicher in weiterer Entfernung zur Fallklappenöffnung anzubringen und somit das Risiko einer funktionshemmenden Verschmutzung des Kraftspeichers zu reduzieren. Zudem ermöglichen die Hebelarme mehr Auswahlmöglichkeiten bei den einsetzbaren Kraftspeichervarianten, wie beispielsweise die Wahl eines Schließgewichts oder beispielsweise eines sich am Rückstauverschlussgehäuse abstützenden Federelements.

In einer besonders vorteilhaften, optionalen Ausführungsform ist der Kraftspeicher ein Schließgewicht. Ein Schließgewicht ist eine besonders zuverlässige Variante zum Bereitstellen einer permanenten Schließkraft auf die Fallklappenöffnung über die Hebelarme der Wippe.

Optional kann in einer weiteren Ausführungsform der zweite Hebelarm beim Öffnen der Fallklappe in der vertikalen Einbauorientierung in einen zur Fallklappenöffnung seitlich angeordneten Ausweichraum des Rückstauverschlusses schwenken.

Dies schützt den zweiten Hebelarm vor Verschmutzungen durch den Abwasserstrahl.

In einer weiteren optionalen Ausführungsform kann das Schließgewicht in den besagten Ausweichraum schwenken.

Dies schützt das Schließgewicht vor Verschmutzungen durch den Abwasserstrahl.

In einer zusätzlich optionalen Ausführung der Erfindung kann der Ausweichraum zumindest zum Teil von einem Revisionsdeckel bereitgestellt werden.

Dies erlaubt es bei Bedarf, die Größe des erwünschten Ausweichraumes allein durch eine vergleichsweise einfache Formveränderung des Revisionsdeckels umzusetzen, ohne dass andere Teile des Rückstauverschlusses geändert werden müssten. Ein einfacher Zugang zum zweiten Hebelarm falls eine Wartung oder Überprüfung notwendig ist, ist ebenfalls gegeben.

In einer weiterhin optionalen Ausführungsform ist ein die voll geöffnete Stellung der Fallklappe definierender Anschlagpunkt so angeordnet ist, dass die Anschlagskraft am Anschlagpunkt hin zum Abwassereinlassstutzen gerichtet ist.

Dies leitet die Anschlagskraft vorteilhaft hin zum Einlassstutzen, welcher in dieser Situation durch die Masse des einfallenden Abwassers zusätzlich stabilisiert wird.

In einer optionalen Ausführung der Erfindung federt an einem die voll geöffnete Stellung der Fallklappe definierenden Anschlagpunkt ein elastisches Element den Anschlagstoß ab.

Dies verhindert Abnutzung durch Anschlagstöße und verringert Geräuschentwicklung. Zudem kann das elastische Element abhängig von der Orientierung des Rückstauverschlusses, beispielsweise, wenn dieser vor seinem Einbau auf dem Kopf steht oder horizontal liegt, als Auflage und Ruhepunkt für die geöffnete Klappe dienen.

In optionalen Ausführungsformen ist das elastische Element am Rückstaugehäuse angebracht. In weiteren optionalen Ausführungsformen ist das elastische Element an der Fallklappe oder am zweiten Hebelarm einer die Fallklappe aufweisenden Wippe angebracht.

In einer weiteren, vorteilhaften Ausführungsform kann optional die Fallklappe einen Schwimmkörper aufweisen, welcher im Falle eines Aufschwimmens zusätzliche Schließkraft in Richtung der Fallklappenöffnung bereitstellt.

Die erhöht zusätzlich die Funktionszuverlässigkeit im Rückstaufall.

Optional ist der Schwimmkörper als Hohlkörper ausgebildet. Dies ermöglicht eine Gewichtseinsparung und somit geringeren Schließkraftaufwand, um die geschlossene Normalstellung zu halten.

Es ist weiterhin vorteilhaft, dass in einer optionalen Ausführungsform die Fallklappe ein die Fallklappenöffnung verschließendes Schließelement mit einem konvex ausgebildeten Abschnitt aufweist, welcher in der Normalstellung in die Fallklappenöffnung hineinragt.

Der konvexe Abschnitt reduziert das Risiko von Schmutzanhaftungen an diesen Bereich und erleichtert das Abspülen von bestehenden Schmutzanhaftungen von diesem Bereich bei der Öffnungsbewegung der Fallklappe.

In einer weiteren, optionalen Ausführungsform ist die Fallklappenöffnung zur Richtung des Abwasserdurchlasspfades schräg orientiert und zeigt zur voll geöffneten Fallklappe hin.

Die schräge Orientierung der Fallklappenöffnung verringert den Weg der schwenkenden Fallklappen von einer geöffneten Stellung hin zur geschlossenen Stellung, und umgekehrt. Hierdurch öffnet und schließt der Rückstauverschluss schneller als bei einer horizontalen Fallklappenöffnung, was das System reaktionsschneller und zuverlässiger macht.

In einer weiteren, optionalen Ausführungsform ragt die Fallklappe in der vertikalen Einbauorientierung und in voll geöffneter Stellung maximal in 15% der in Schwerkraftrichtung projizierten Fallklappenöffnungsfläche hinein.

Dies ermöglicht eine besonders schnelle Durchspülung des Rückstauverschlusses und Freigabe des Fallweges in Richtung des Abwasserauslassstutzens, wobei die Fallklappe viel Raum für den Abwasserfallstrahl freigeben kann.

Der vorgenannte Effekt verbessert sich nochmals bei einem maximalen Hineinragen von 10%, insbesondere bei einem maximalen Hineinragen von 5%.

In einer weiterhin optionalen Ausführungsform weist der Rückstauverschluss an der Fallklappenöffnung in Richtung des Abwasserdurchlasspfades eine sprungartige Abwasserdurchtrittsflächenaufweitung auf.

Ein sprungartiges Aufweiten der Abwasserdurchtrittsfläche in Richtung des Abwasserdurchlasspfades schafft an der Fallklappenöffnung einen Ventileffekt, welcher das Anhaften von Verschmutzungen im Fallklappenöffnungsbereich reduziert.

Je höher der Druck des Abwassers oberhalb der Falklappenöffnung, desto stärker wird dieser Ventileffekt.

Bei Anlage eines unter Druck stehenden Abwassers an der geschlossenen Fallklappe wird das Abwasser beim Öffnen der Fallklappe an der Abwasserdurchtrittsflächenaufweitung in eine drucklose Freispiegelentwässerung überführt.

In weiteren optionalen Ausführungsformen weitet sich die Abwasserdurchtrittsfläche für das durchströmende Abwasser sprungartig um mindesten 25% auf, insbesondere um mindestens 50% auf, insbesondere um mindestens 75% auf.

Ein optionales Aufweiten um mindestens 25% reduziert bereits Ablagerungen besonders gut, was durch das Aufweiten von mindestens 50% nochmals gesteigert werden kann und bei mindestens 75% nochmals bessere Resultate sicherstellt.

In einer vorteilhaften optionalen Ausführungsform ist die Innenquerschnittsfläche des Abwasserauslassstutzens größer als die der Fallklappenöffnung.

Dies stellt eine zügige Durchspülung und Abfluss des Abwassers durch den Rückstauverschluss sicher, ohne dass sich Abwasser im Rückstauverschluss aufstaut und bewegliche Teile vermeidbar verschmutzt.

In einer vorteilhaften, optionalen Variante ist die Innenquerschnittsfläche mindestens 25% größer, optional sogar mindesten 50% größer als die der Fallklappenöffnung, was die zuvor genannten Effekte nochmals steigert. Dies gilt insbesondere bei der Variante von mindestens 50%.

In einer weiteren, optionalen Ausführungsform kann die in der vertikalen Einbauorientierung in Schwerkraftrichtung projizierte Fallklappenöffnungsfläche vollständig innerhalb des Querschnitts des Abwasserauslassstutzens liegen.

Dies stellt eine zügige Durchspülung des Rückstauverschlusses im fallenden Abwasserstrom sicher und verringert das Risiko von funktionsbeeinträchtigenden Schmutzablagerungen im Rückstauverschluss.

Eine weitere, optionale Ausführungsform der Erfindung betrifft ein besonders zuverlässiges Abwasserhebesystem aufweisend einen Rückstauverschluss gemäß einer der vorherigen Ausführungsformen.

Hierbei wird ein Abwasserhebesystem vorgeschlagen, aufweisend eine Abwasserhebeanlage mit einer Abwasserförderleitung, wobei die Abwasserhebeanlage dazu eingerichtet ist, Abwasser durch die Abwasserförderleitung in Abwasserförderrichtung von einem geodätisch tieferliegenden Niveau hin zu einem geodätisch höherliegenden Entwässerungsniveau zu pumpen, wobei die Abwasserförderleitung in Abwasserförderrichtung einen Steigleitungsabschnitt aufweist, einen Bogenleitungsabschnitt mit einem Scheitelniveau der Abwasserförderleitung, und einen Fallleitungsabschnitt, in welchem sich Abwasser in Schwerkraftrichtung bewegt, das Abwasserhebesystem weiterhin aufweisend einen Rückstauverschluss gemäß einem der hier zuvor beschriebenen Ausführungsformen, wobei der Fallleitungsabschnitt den Rückstauverschluss aufweist.

Es hat sich überraschend gezeigt, dass eine Anordnung, in welcher der Fallleitungsabschnitt den Rückstauverschluss aufweist, die Hebeanlage nach dem Stoppen einer Hebeaktivität vor einem zu starken Rückschlag der Abwassersäule schützt und gleichzeitig wird der Rückstauverschluss im Hebebetrieb mit Abwasser besonders kräftig durchspült, wodurch dieser vor anhaftenden Verschmutzungen bewahrt wird und zuverlässig einsatzfähig bleibt. Hinzu kommen die hier bereits zuvor erläuterten Vorteile des erfindungsgemäßen Rückstauverschlusses, welche in Summe ein besonders zuverlässiges Abwasserhebesystem schaffen.

In optionalen Ausführungsformen der zuvor genannten Ausführungsformen des erfindungsgemäßen Rückstauverschlusses erstreckt sich die Haupterstreckungsachse des Rückstauverschlusses, einschließlich des Abwasserdurchlasspfades an der Fallklappenöffnung, in der Einbauorientierung entlang der Vertikalen und verläuft hierbei in Schwerkraftrichtung. Steile Winkelabweichungen der Haupterstreckungsachse, oder zumindest des Abwasserdurchlasspfades an der Fallklappenöffnung, in der Einbauorientierung von bis zu 20° zur Vertikalen, insbesondere von bis zu 5° zur Vertikalen, sind in weiteren Ausführungsformen der Erfindung ebenfalls miteingeschlossen.

In optionalen Ausführungsformen der zuvor genannten Ausführungsformen des erfindungsgemäßen Rückstauverschlusses sind die beiden Hebelarme der die Fallklappe aufweisenden Wippe winkelig zueinander angeordnet, insbesondere in einem weiterhin optionalen Bereich zwischen 180° und 90°. Dies erlaubt besonders raumsparende Ausführungen der Wippe unabhängig von der Art des Kraftspeichers.

In weiteren optionalen Ausführungen all der zuvor genannten Ausführungsformen der Erfindung ist die Abwasserförderleitung des erfindungsgemäßen Abwasserhebesystems von der Hebeanlage bis hin zum Rückstauverschluss, insbesondere zumindest bis hin zur Dichtebene des Rückstauverschlusses, unbelüftet. Dies verbessert die rückschlagdämpfende Wirkung sowie die Reaktionsgeschwindigkeit des Systems durch sich besonders schnell aufbauende Druckdifferenzen.

In weiteren optionalen Ausführungen all der zuvor genannten Ausführungsformen der Erfindung ist besagte Abwasserförderleitung von der Hebeanlage bis hin zur Einmündung in eine hierarchisch übergeordnete Abwasserfallleitung, beispielsweise in die zentrale Abwasserfallleitung eines Gebäudes, nicht belüftet.

In weiteren optionalen Ausführungen all der zuvor genannten Ausführungsformen der Erfindung liegt das Scheitelniveau der Abwasserförderleitung geodätisch oberhalb der örtlichen Rückstauebene. In weiteren optionalen, alternativen Ausführungsformen all der zuvor genannten Ausführungsformen der Erfindung liegt das Scheitelniveau der Abwasserförderleitung geodätisch unterhalb der örtlichen Rückstauebene.

In bevorzugten optionalen Ausführungsformen des zuvor genannten Abwasserhebesystems der Erfindung erstreckt sich die Erstreckungsachse des erfindungsgemäßen Fallleitungsabschnitts entlang der Vertikalen und verläuft hierbei in Schwerkraftrichtung. Steile Winkelabweichungen der Erstreckungsachse des Fallleitungsabschnitts von bis zu 20° zur Vertikalen, insbesondere von bis zu 5° zur Vertikalen, sind in weiteren Ausführungsformen der Erfindung ebenfalls miteingeschlossen.

Sämtliche der hier zuvor beschriebenen Ausführungsformen sind beliebig miteinander kombinierbar.

Nachfolgend werden anhand von Figuren Vorteile und Funktionen der Erfindung näher erläutert, wobei die Figuren mögliche Ausführungsformen der Erfindung zeigen, welche in vorteilhafter Weise zuvor genannte Ausführungsformen kombinieren. Einige funktionsgleiche Merkmale sind hierbei der Übersichtlichkeit halber mit gleichen Referenzzeichen versehen.

Es zeigen
Figur 1 einen Querschnitt entlang einer zentralen Haupterstreckungsachse eines erfindungsgemäßen Rückstauverschlusses in Einbauorientierung, mit der Fallklappe in einer geschlossenen Normalstellung,
Figur 2 einen Querschnitt wie Fig. 1 mit der Fallklappe in einer voll geöffneten Stellung,
Figur 3eine nicht geschnittene Ansicht von oben auf den Rückstauverschluss aus Fig. 2, betrachtet entlang der Haupterstreckungsachse und in Schwerkraftrichtung,
Figur 4eine perspektivische Seitenansicht auf den Rückstauverschluss aus Fig. 1, mit abgenommenen Revisionsdeckel,
Figur 5 eine Ausführungsform eines erfindungsgemäßen Abwasserhebesystems mit einem erfindungsgemäßen Rückstauverschluss.

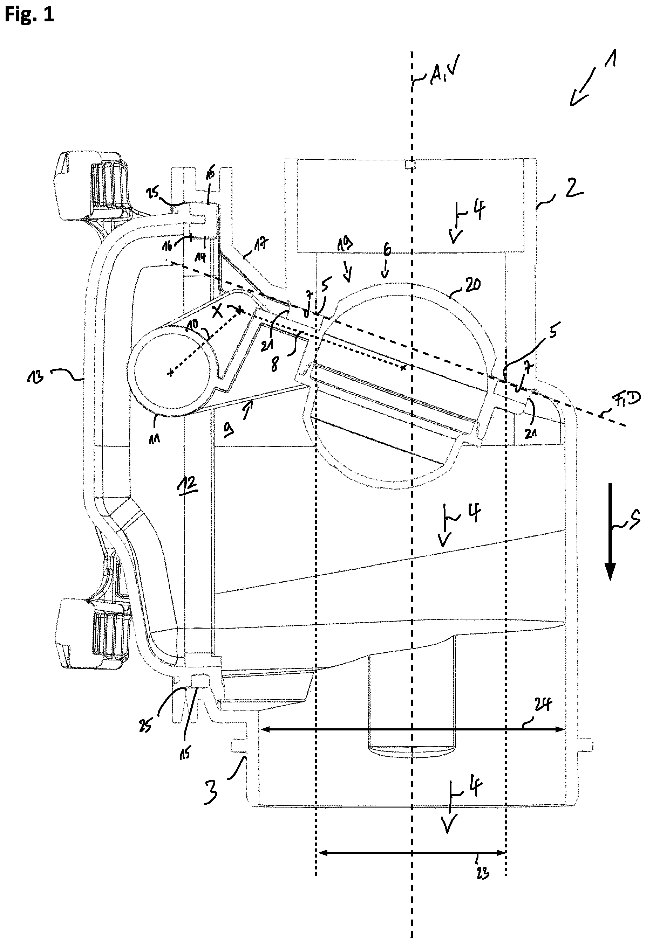

Fig. 1 zeigt einen Rückstauverschluss 1 gemäß einer Ausführungsform der Erfindung. Der Rückstauverschluss 1 ist hierbei gezeigt in seiner Einbauorientierung, geschnitten entlang seiner zentralen Haupterstreckungsachse A, welche hier mit der Vertikalen V zusammenfällt und parallel zur Schwerkraftrichtung S liegt.

Der Rückstauverschluss 1 ist dabei rohrartig ausgebildet, mit einem Abwassereinlassstutzen 2 an seinem oberen Ende und mit einem Abwasserauslassstutzen 3 an seinem unteren Ende.

Der Abwasserdurchlasspfad 4 des Rückstauverschlusses 1 verläuft vom Abwassereinlassstutzen 2 hin zum Abwasserauslassstutzen 3. Der Abwasserdurchlasspfad 4 verläuft in dieser Ausführungsform im gesamten Rückstauverschluss 1 parallel zur Haupterstreckungsachse A sowie in der Einbauorientierung parallel zur Vertikalen V und somit in Schwerkraftrichtung S.

In nicht gezeigten, weiteren möglichen Ausführungsformen sind in der Einbauorientierung der Abwasserdurchlasspfad 4, abschnittsweise oder vollständig, und/oder die Haupterstreckungsachse A winklig zur Vertikalen V angeordnet, beispielsweise in einem Bereich von 0° bis zu 20° zur Vertikalen V, insbesondere im Bereich von 0° bis zu 5° zur Vertikalen V.

Zwischen dem Abwassereinlassstutzen 2 und dem Abwasserauslassstutzen 3 weist der Rückstauverschluss 1 eine Fallklappenöffnung 5 auf, welche in ihrer Normalstellung entgegen die Schwerkraftrichtung S von einer schwenkbaren Fallklappe 6 des Rückstauverschlusses 1 dicht verschlossen gehalten wird.

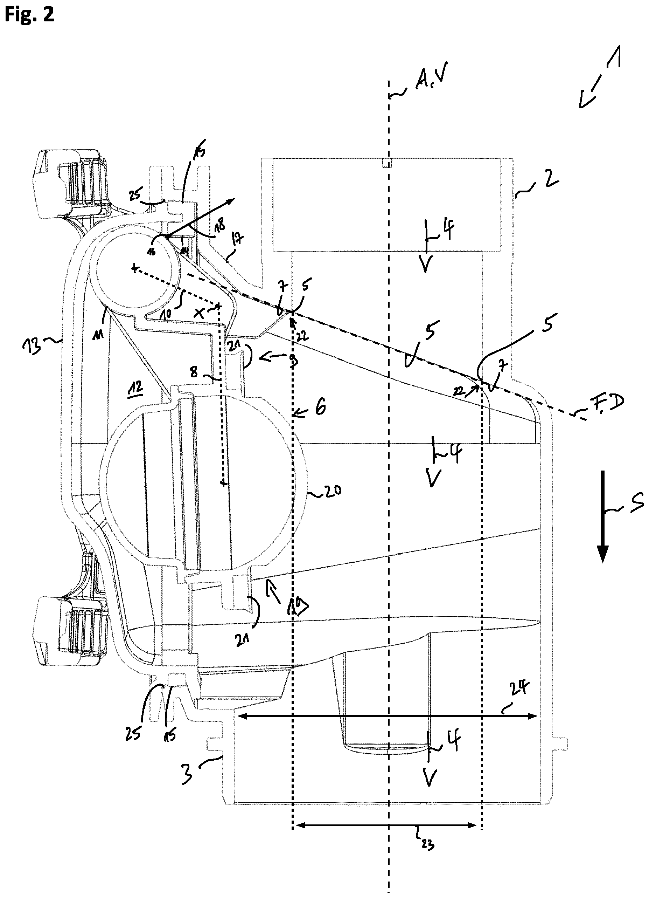

Fig. 2 zeigt die Fallklappe 6 in ihrer voll geöffneten Stellung. Die Fallklappe 6 ist um ihre Schwenkachse X zwischen der voll geöffneten Stellung und ihrer standardmäßig geschlossenen Stellung hin und her schwenkbar. Hierbei wirkt stets eine Kraft auf die Fallklappe 6, welche die Fallklappe 6 hin zur geschlossenen Stellung bewegen will.

Die Fallklappe 6 ist in dieser Ausführungsform als ein erster Hebelarm 8 einer an der Schwenkachse X gelagerten Wippe 9 ausgeführt. Der zweite Hebelarm 10 der Wippe 9 weist in dieser Ausführungsform einen Kraftspeicher in Form eines Schließgewichtes 11 auf, welches die Fallklappe 6 in der Einbauorientierung stets in die geschlossene Stellung drückt und hierbei entsprechend mit dem zweiten Hebelarm 10 um die Schwenkachse X schwenkt.

Die Fallklappenöffnung 5 erstreckt sich in einer Öffnungsebene F und wird von einem Fallklappenöffnungssitz 7 umgeben, an welche eine entsprechend umlaufende Dichtung 21 an der Fallklappe 6 in der geschlossenen Stellung unter der vom Schließgewicht 11 über die Hebelarme 10, 8 bereitgestellten Schließkraft dichtend anliegt.

Die Fallklappenöffnungsebene F ist in dieser Ausführungsform zum Abwasserdurchlasspfad 4 an dieser Stelle schräg orientiert, hier im spitzen Winkel von ca. 20°. Wie man in Fig. 2 gut sehen kann, zeigt die Fallklappenöffnung 5 hin zur Fallklappe 6 in der voll geöffneten Stellung.

Wie ebenfalls in Figuren 1 und 2 gut zu sehen ist, ist die Schwenkachse X oberhalb eines tiefsten Punktes der Fallklappenöffnung 5 angeordnet, hier auf Höhe des höchsten Punktes der Fallklappenöffnung 5.

Der erste Hebelarm 8 und der zweite Hebelarm 10 sind in dieser Ausführungsform winkelig zueinander angeordnet, wodurch ein seitlich zur Fallklappenöffnung 5 angeordneter Ausweichraum 12 des Rückstauverschlusses 1 für den zur voll geöffneten Stellung schwenkenden zweiten Hebelarm 10, insbesondere für das am Ende des zweiten Hebelarms 10 angeordnete Schließgewicht 11, seitlich kompakter ausgeführt werden kann. Der Ausweichraum 12 ist hierbei zum Teil durch einen kuppelartigen Revisionsdeckel 13 des Rückstauverschlusses 1 gebildet. Der Revisionsdeckel 13 ist vom restlichen Rückstauverschluss 1 bei Bedarf abnehmbar.

Wie man in Fig. 2 gut sehen kann, ist das Schließgewicht 11 in der voll geöffneten Stellung der Fallklappe 6 in Anschlag mit einem elastischen Element 14, hier bereitgestellt von einem Teil der Revisionsdeckeldichtung 15. Der Anschlagpunkt 16 zwischen der Wippe 9, hier dem Schließgewicht 11, und dem Gehäuse 17 des Rückstauverschlusses 1 liegt hier am elastischen Element 14 und ist so gewählt, dass eine bei Anschlag wirkende Anschlagskraft 18 hin zum Abwassereinlassstutzen 2 gerichtet ist.

Die Fallklappe 6 weist in der vorliegenden Ausführungsform ein Schließelement 19 auf, mit einem zur Fallklappe 6 hinzeigenden, konvex gewölbten Abschnitt 20, hier umgeben von der Dichtung 21 der Fallklappe 6. Wie in Fig. 1 gut zu sehen, ragt der konvexe Abschnitt 20 in der geschlossenen Stellung der Fallklappe 6 in die Fallklappenöffnung 5 hinein.

Das Schließelement 19 ist in dieser Ausführungsform als geschlossener Hohlkörper ausgeführt, der eine ballartige Form aufweist. Der Hohlkörper ist schwimmfähig. Im vorliegenden Fall ist die der Fallklappenöffnung 5 abgewandte Seite des Schließelements 19 ebenfalls konvex gewölbt, um einen möglichst volumenstarken und somit auftriebsstarken, hohlen Schwimmkörper zu bilden.

Wie man in Fig. 2 ebenfalls gut erkennen kann, wird in dieser Ausführungsform an der Fallklappenöffnung 5 in Richtung des Abwasserdurchlasspfades 4 eine sprungartige Abwasserdurchtrittsflächenaufweitung 22 realisiert. Hier, eine sprungartige Aufweitung in der lichten Weite parallel zur Fallklappenöffnung 5 bzw. parallel zur Fallklappenöffnungsebene F, in welcher die Fallklappenöffnung 5 liegt. Die Fallklappenöffnungsebene F fällt in dieser Ausführungsform mit der Dichtebene D, in welcher die Fallklappe 6 die Fallklappenöffnung 5 mit der Dichtung 21 gegen den Fallklappenöffnungssitz 7 in der geschlossenen Stellung abdichtet, zusammen.

In dieser Ausführungsform wird eine sprungartige Aufweitung in der lichten Weite parallel zur Fallklappenöffnungsebene F um ca. 90% realisiert. Prozentual geringere Aufweitungen von mind. 25% sind jedoch in anderen Ausführungsformen ebenfalls denkbar.

In der gezeigten Ausführungsform hat die Fallklappenöffnung 5 einen Durchmesser von 63,5mm.

In optionalen, nicht gezeigten, Ausführungsformen liegt der Durchmesser der Fallklappenöffnung 5 im Bereich von 30mm bis 100mm, insbesondere im Bereich von 40mm bis 70mm.

Die vom einlassseitigen Abwasserstrom an der geschlossenen Fallklappe 6 zu überwindende Schließkraft liegt in möglichen Ausführungsformen im Bereich vom 0,5 Newton bis 10 Newton, insbesondere im Bereich von 1 Newton bis 5 Newton, je nach Fläche der Fallklappenöffnung 5.

In weitere möglichen Ausführungsformen öffnet die Fallklappe 6 bei einem einlassseitig anliegenden Abwasserdruck an der Fallklappenöffnung 5 im Bereich von 0,1 bar bis 1 bar, insbesondere im Bereich von 0,15 bar bis 0,5 bar.

Das Schließgewicht hat in dieser Ausführungsform eine Masse von ca. 240g.

Der für den Rückstauverschluss zugelassene maximale Rückstaudruck beträgt in dieser Ausführungsform 0,5 bar. In weiteren Ausführungsformen liegt dieser im Bereich von bis zu 2 bar.

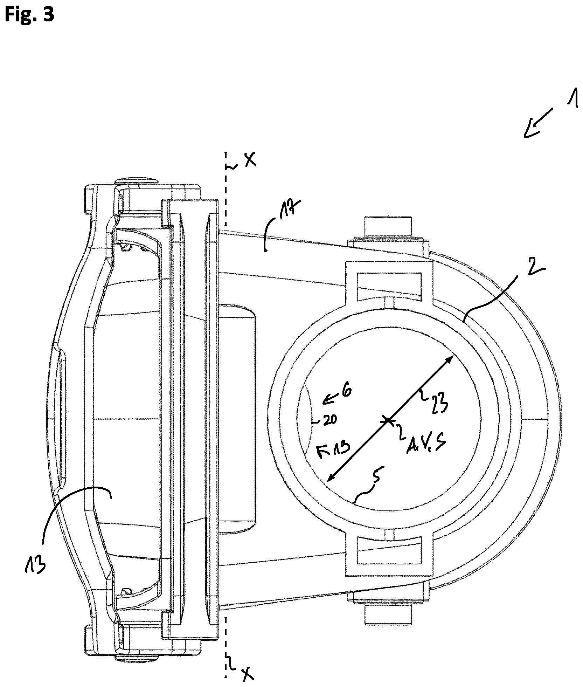

Fig. 3 zeigt eine Ansicht des Rückstauverschlusses 1 in voll geöffneter Fallklappenstellung von oben entlang der Haupterstreckungsachse A bzw. der Vertikalen V, und somit in Schwerkraftrichtung S. Hierbei ist die Fallklappenöffnung 5 zu sehen. Wie hier gut zu erkennen ist, ragt die Fallklappe 6 mit ihrem konvexen Abschnitt 20 in ihrer voll geöffneten Stellung nur minimal in die in Schwerkraftrichtung S projizierten Fallklappenöffnungsfläche 23 hinein, hier in weniger als 5% dieser Fläche 23. Ansonsten ist in dieser voll geöffneten Fallklappenstellung der Fallweg entlang des Abwasserdurchlasspfades 4 in Schwerkraftrichtung S vollständig frei bis zum Auslassstutzen 3.

Wie die Blickrichtung in Fig. 3 ebenfalls gut erkennen lässt, ist die Schwenkachse X sowie der zweite Hebelarm 10 samt Schließgewicht 11 im zur Fallklappenöffnung 5 hin geschützten Ausweichraum 12 angeordnet, und somit in Fig. 3 nicht zu sehen.

Wie in Fig. 2 gut zu sehen ist, ist die Innenquerschnittsfläche 24 des Abwasserauslassstutzens 3 größer als die der Fallklappenöffnung 5, hier um ca. 150% größer.

Der Zusammenschau von Fig. 2 und Fig. 3 entnimmt man ebenfalls gut, dass die in der vertikalen Einbauorientierung in Schwerkraftrichtung projizierte Fallklappenöffnungsfläche 23 vollständig innerhalb des Querschnitts 24 des Abwasserauslassstutzens 3 liegt.

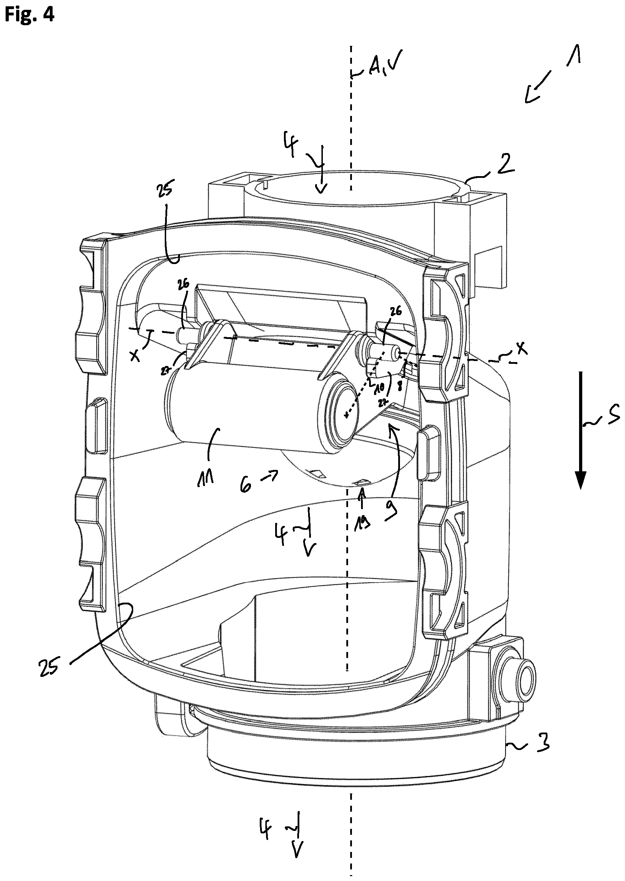

Fig. 4 zeigt den Rückstauverschluss 1 in geschlossenem Zustand in einer seitlichen Perspektive, mit abgenommenen Revisionsdeckel 13.

Hierbei kann man gut die bewusst seitlich und weit oben angeordnete Schwenkachse X der Fallklappe 6 sehen und auch, dass in dieser Ausführungsform die Wippe 9 samt Schwenkachse X durch die Revisionsöffnung 25 bei Bedarf austauschbar gestaltet ist. Hierbei weist die Schwenkachse X fluchtend angeordnet Zapfen 26 auf, welche jeweils in einer rückstaugehäuseseitigen Aufnahme 27 schwenkbar gehalten sind, wobei die Aufnahmen 27 hin zur Revisionsöffnung 25 geöffnet sind, sodass die Wippe 9 bei Bedarf entnommen werden kann.

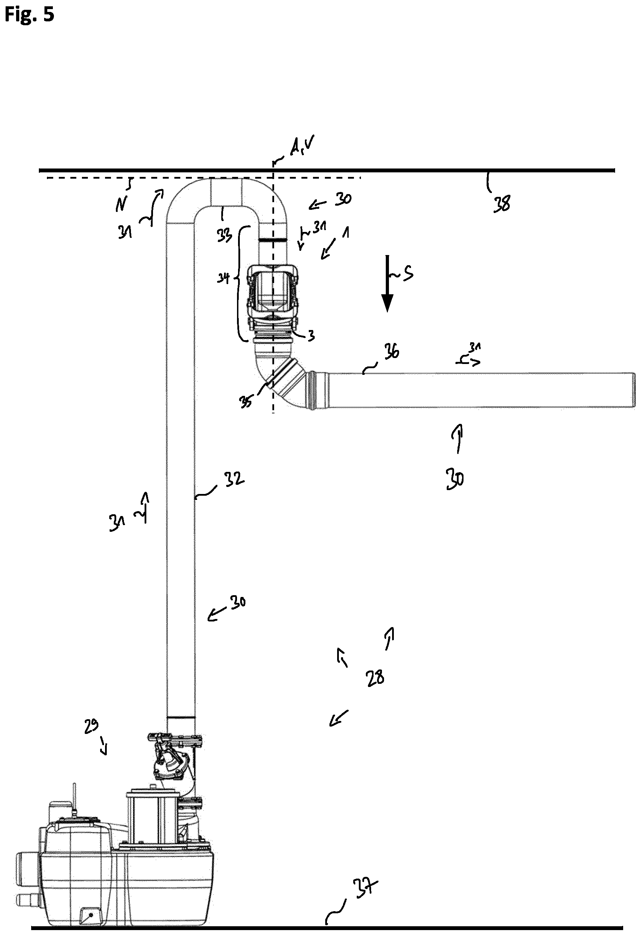

Figur 5 zeigt eine Ausführungsform eines erfindungsgemäßen Abwasserhebesystems 28 mit einem erfindungsgemäßen Rückstauverschluss 1.

Das Abwasserhebesystem 28 weist eine Abwasserhebeanlage 29, eine Abwasserförderleitung 30 und den Rückstauverschluss 1 auf.

Die Abwasserhebeanlage 29 ist dazu eingerichtet, Abwasser durch die Abwasserförderleitung 30 bzw. durch die Abwasserförderrohrleitung in Abwasserförderrichtung 31 von einem geodätisch tieferliegenden Niveau hin zu einem geodätisch höherliegenden Entwässerungsniveau zu pumpen.

Im vorliegenden Fall ist die Hebeanlage 29 dazu eingerichtet, häusliches Abwasser, einschließlich fäkalienhaltigen Abwassers, zu pumpen.

Die Hebeanlage 29 ist an ihrem Druckausgang mit dem Beginn der Abwasserförderleitung 30 verbunden. Den Beginn der Abwasserförderleitung 30 bildet ein vertikal ausgerichteter Steigleitungsabschnitt 32, der an seinem Ende in einen Bogenleitungsabschnitt 33 übergeht, welcher das Scheitelniveau N der Abwasserförderleitung 30 aufweist.

Am in Abwasserförderrichtung 31 betrachteten Ende des Bogenleitungsabschnitts 33 geht der Bogenleitungsabschnitt 33 in einen vertikal orientierten Fallleitungsabschnitt 34 über, welcher hier den Rückstauverschluss 1 aufweist. In der vorliegenden Ausführungsform ist der Rückstauverschluss 1 am Ende des Fallleitungsabschnitts 34 angeordnet.

Im vertikalen Fallleitungsabschnitt 34, also auch im Rückstauverschluss 1, bewegt sich das im Hebebetrieb von der Hebeanlage 29 kommende Abwasser in Schwerkraftrichtung S. In Anschluss an den Abwasserauslassstutzen 3 des Rückstauverschlusses 1 folgt, über einen 45° Stück 35, eine geradlinige Gefälleleitung 36 (mit hier ca. 2% Gefälle), welche mittels Schwerkraft hin zu einem hierarchisch übergeordneten Abwasserkanal (nicht dargestellt), genauer hin zur zentralen Abwasserfallleitung des Gebäudes, entwässert (nicht dargestellt).

Der Abwasserdurchlasspfad 4 des Rückstauverschlusses 1 bildet hier einen Teil des Abwasserbewegungspfades der Abwasserförderleitung 30.

In der vorliegenden Ausführungsform liegt das tieferliegende Niveau bei der Hebeanlage 29 kurz über dem Boden 38 des Installationsraumes, hier ein Kellerraum, und das höherliegende Niveau beim Scheitelniveau N der Abwasserförderleitung 30, welches hier knapp unter der Raumdecke 38 liegt.

In der vorliegenden Ausführungsform ist der Steigleitungsabschnitt 32 als ein gerades vertikal verlaufendes Rohr ausgebildet. In nicht dargestellten Ausführungsformen verläuft der Steigleitungsabschnitt 32 beispielsweise treppenstufenartig, mit einer oder mehreren Stufen nach oben in Richtung Bogenleitungsabschnitt 33.

In nicht dargestellten, weiteren möglichen Ausführungsformen folgt der Fallleitungsabschnitt 34 nicht unmittelbar auf den Bogenleitungsabschnitt 33, sondern es liegen weitere Gefälleabschnitte der Abwasserförderleitung 30 zwischen Bogenleitungsabschnitt 33 und dem Fallleitungsabschnitt 34.

Nachfolgend werden Funktionen eines erfindungsgemäßen Rückstauverschlusses 1 anhand der beschriebenen Ausführungsform kurz erläutert.

Die Fallklappe 6 ist standardmäßig in der geschlossenen Stellung, wobei das Schließgewicht 11 über die beiden Hebelarme 8, 10 die Schließkraft bereitstellt, welche das einlassseitige auf die Fallklappe 6 drückende Abwasser überwinden muss, damit die Fallklappe 6 von der geschlossenen Stellung in Richtung der voll geöffneten Stellung schwenkt.

Beim Öffnen der Fallklappe 6 in Schwerkraftrichtung S tritt an der Abwasserdurchtrittsflächenaufweitung 22 ein Ventileffekt ein, welcher das Abwasser an dieser Stelle des Abwasserdurchlasspfades 4 in Schwerkraftrichtung S zusätzlich beschleunigt und hierbei die Fallklappenöffnung 5 sowie die zur Fallklappenöffnung 5 zeigenden Flächen der Fallklappe 6, samt Dichtung 21 und konvexen Abschnitt 20, im fallenden Abwasserstrahl reinigt bzw. der Abwasserstrahl ein Anhaften von Verschmutzungen an diese Teile unterbindet oder zumindest verringert.

Beim ersten Öffnen unter einem einlassseitig ankommenden Abwasserschwall kann es sein, dass die Fallklappe 6, hier das Schließgewicht 11, gegen die Schließkraft bis hin zum Anschlagpunkt 16 geschlagen wird, wobei in einem solchen Fall die Kraft 18 des Anschlagstoßes durch das elastische Element 14 abgefedert wird und durch die gewählte Position des Anschlagpunktes 16 in Richtung des gerade mit Abwassermasse gefüllten Abwassereinlassstutzens 2 gerichtet wird, was belastende Auswirkungen des Anschlagstoßes auf die Struktur des Rückstauverschlusses 1 abmildert und Schlaggeräusche verringert.

Der zweite Hebelarm 10 samt Schließgewicht 11 bewegen sich bei der Öffnungsbewegung tiefer in den Ausweichraum 12.

Das Schließgewicht 11 drückt die Fallklappe 6 jedoch stetig in Richtung der Fallklappenöffnung 5, sodass das Schließelement 19 während einer Abwasserdurchlasssituation im Abwasserstrahl gereinigt wird.

Durch die hier fluchtende Anordnung der Fallklappenöffnung 5 zum Auslassstutzen 3 und die merklich größere Innenquerschnittsfläche des Abwasserstutzens 24 in Kombination mit der nur geringfügig in die in Schwerkraftrichtung projizierte Fallklappenöffnungsfläche 23 hineinragende Fallklappe 6 wird sichergestellt, dass der Abwasserstrom beim Öffnen der Fallklappe 6 effizient und schnell durch den Rückstauverschluss 1 geleitet wird und dieser hierbei besonders gut durchspült wird.

Sobald die Kraft des Abwasserschwalls nachlässt und geringer als die Schließkraft wird, schließt die Fallklappe 6 die Fallklappenöffnung 5 wieder.

Im Falle einer Rückstausituation bildet sich ein Luftpolster im geschlossenen Rückstauverschluss unterhalb der Dichtebene D aus, sodass im vorliegenden Fall die Schwenkachse X samt der Wippe 9 nicht mit dem Rückstauabwasser in Berührung kommen und somit nicht durch dieses verschmutzt werden können. Im Fall des hier gezeigten Rückstauverschlusses 1 liegt der Rückstaupegel zumindest noch unterhalb des Ausweichraums 12, bei der Öffnung des Abwasserauslassstutzen 3. Abhängig vom eingebauten Zustand des Rückstauverschlusses kann der Rückstaupegel auch auslassseitig unterhalb bzw. außerhalb des Rückstauverschlusses 1 liegen, unter anderem abhängig von der Länge des sich am Abwasserauslassstutzen 3 in Abwasserförderrichtung 31 noch anschließenden Restes des Fallleitungsabschnitts 34.

Sollte die Fallklappe 6 einmal nicht vollständig dicht geschlossen sein, so ist es im vorliegenden Fall dennoch sehr wahrscheinlich, dass zumindest die Schwenkachse X, mit den Zapfen 26 und Aufnahmen 27 aufgrund deren oberen seitlichen Anordnung in einem sich ausbildenden, kleineren Luftpolster liegen, und somit trotz Leckage der Fallklappendichtung 6 nicht mit dem stark verschmutzen Rückstauabwasserpegel in Kontakt kommen.

In dem in Fig. 5 gezeigten Abwasserhebesystem 28 verringert ein erfindungsgemäßer Rückstauverschluss 1 den Rückschlag der Abwassersäule auf die Hebeanlage 29, wenn der Hebebetrieb stoppt, weil ein rückstauartiges Rückströmen bzw. Rückfallen der Abwassersäule im Steigleitungsabschnitt 32 entgegen der Abwasserförderrichtung 31 vom Rückstauverschluss 1 unterbunden wird. Gleichzeitig wird der vertikale Rückstauverschluss 1 durch den Druck der Hebeanlage 29 besonders vorteilhaft durchspült. Zudem findet an der Abwasserdurchtrittsflächenaufweitung 22 beim Öffnen der Fallklappe 6 ein Übergang des darüber unter Druck stehenden Abwassers in eine drucklose und fallende Freispiegelentwässerung statt. Was durch den hierbei besonders ausgeprägten Ventileffekt den Rückstauverschluss 1 besonders sauber hält.

## Patentansprüche

1. Rohrartiger Rückstauverschluss (1) für den vertikalen Einbau in ein Abwasserrohrgefälle, aufweisend
einen Abwassereinlassstutzen (2) und einen Abwasserauslassstutzen (3), wobei ein Abwasserdurchlasspfad (4) des Rückstauverschlusses (1) vom Abwassereinlassstutzen (2) hin zum Abwasserauslassstutzen (3) verläuft,
eine schwenkbare Fallklappe (6), welche zwischen Abwassereinlassstutzen (2) und Abwasserauslassstutzen (3) mit einer Fallklappenöffnung (5) dichtend zusammenspielt, und die Fallklappe (6) einen Abwasserfluss in Richtung des Abwasserdurchlasspfades (4) durch eine geöffnete Stellung erlaubt und entgegen der Richtung des Abwasserdurchlasspfades (4) durch eine geschlossene Stellung sperrt,
**dadurch gekennzeichnet, dass** die Fallklappe (6) in einer vertikalen Einbauorientierung des Rückstauverschlusses (1) in einer Normalstellung selbsttätig entgegen der Schwerkraftrichtung (S) geschlossen ist und in einer Abwasserdurchlasssituation in Schwerkraftrichtung (S) selbsttätig öffnet.

2. Rückstauverschluss (1) gemäß Anspruch 1, wobei
die Schwenkachse (X) der Fallklappe (6) so im Rückstauverschluss (1) angeordnet ist, dass sich die Schwenkachse (X) in einer Abwasserrückstausituation in einem sich zwischen der geschlossenen Fallklappenöffnung (5) und dem Abwasserrückstaupegel ausgebildeten Luftpolster befindet, insbesondere die Fallklappe (6) so im Rückstauverschluss (1) angeordnet ist, dass sich die Fallklappe (6) in einer Abwasserrückstausituation in einem sich zwischen der geschlossenen Fallklappenöffnung (5) und dem Abwasserrückstaupegel ausgebildeten Luftpolster befindet.

3. Rückstauverschluss (1) nach einem der vorherigen Ansprüche, wobei
die Schwenkachse (X) der Fallklappe (6) in der vertikalen Einbauorientierung auslassseitig zur Fallklappenöffnung (5) oberhalb eines tiefsten Punktes der Fallklappenöffnung (5) angeordnet ist.

4. Rückstauverschluss (1) gemäß einem der vorherigen Ansprüche, wobei
die Fallklappe (6) als ein erster Hebelarm (8) einer an der Schwenkachse (X) gelagerten Wippe (9) ausgebildet ist und ein Kraftspeicher an dem gegenüberliegenden zweiten Hebelarm (10) die Fallklappe (6) in der vertikalen Einbausituation selbsttätig in die Normalstellung drückt, wobei der Kraftspeicher insbesondere ein Schließgewicht (11) ist.

5. Rückstauverschluss (1) gemäß Anspruch 4, wobei
der zweite Hebelarm (10), insbesondere das Schließgewicht (11), beim Öffnen der Fallklappe (6) in der vertikalen Einbauorientierung in einen zur Fallklappenöffnung (5) seitlich angeordneten Ausweichraum (12) des Rückstauverschlusses schwenken kann, insbesondere wobei der Ausweichraum zumindest zum Teil von einem Revisionsdeckel (13) bereitgestellt wird.

6. Rückstauverschluss (1) gemäß einem der vorherigen Ansprüche, wobei
ein die voll geöffnete Stellung der Fallklappe (6) definierender Anschlagpunkt (16) so angeordnet ist, dass die Anschlagskraft (18) am Anschlagpunkt (16) hin zum Abwassereinlassstutzen (2) gerichtet ist.

7. Rückstauverschluss (1) gemäß einem der vorherigen Ansprüche, wobei
an einem die voll geöffnete Stellung der Fallklappe (6) definierenden Anschlagpunkt (16) ein elastisches Element (14) den Anschlagstoß abfedert.

8. Rückstauverschluss (1) gemäß einem der vorherigen Ansprüche, wobei
die Fallklappe (6) einen Schwimmkörper aufweist, welcher im Falle eines Aufschwimmens zusätzliche Schließkraft in Richtung der Fallklappenöffnung (5) bereitstellt, wobei der Schwimmkörper insbesondere als Hohlkörper ausgebildet ist.

9. Rückstauverschluss (1) gemäß einem der vorherigen Ansprüche,
wobei die Fallklappe (6) ein die Fallklappenöffnung (5) verschließendes Schließelement (19) mit einem konvex ausgebildeten Abschnitt (20) aufweist, welcher in der Normalstellung in die Fallklappenöffnung (5) hineinragt.

10. Rückstauverschluss (1) gemäß einem der vorherigen Ansprüche,
wobei die Fallklappenöffnung (5) zur Richtung des Abwasserdurchlasspfades (4) schräg orientiert ist und zur voll geöffneten Fallklappe (6) hinzeigt.

11. Rückstauverschluss (1) gemäß einem der vorherigen Ansprüche, wobei
die Fallklappe (6) in der vertikalen Einbauorientierung und in voll geöffneter Stellung maximal in 15%, insbesondere maximal in 10%, besonders maximal in 5% der in Schwerkraftrichtung projizierten Fallklappenöffnungsfläche (23) hineinragt.

12. Rückstauverschluss (1) gemäß einem der vorherigen Ansprüche,
wobei der Rückstauverschluss (1) an der Fallklappenöffnung (5) in Richtung des Abwasserdurchlasspfades (4) eine sprungartige Abwasserdurchtrittsflächenaufweitung (22) aufweist, insbesondere eine Aufweitung von mindestens 25%, bevorzugt von mindestens 50%, vorzugsweise von mindestens 75%.

13. Rückstauverschluss (1) gemäß einem der vorherigen Ansprüche,
wobei die Innenquerschnittsfläche (24) des Abwasserauslassstutzens (3) größer ist als die der Fallklappenöffnung (5), insbesondere mindestens 25% größer, besonders mindesten 50% größer ist.

14. Rückstauverschluss (1) gemäß einem der vorherigen Ansprüche, wobei
die in der vertikalen Einbauorientierung in Schwerkraftrichtung projizierte Fallklappenöffnungsfläche (23) vollständig innerhalb des Querschnitts des Abwasserauslassstutzens (3) liegt.

15. Abwasserhebesystem (28), aufweisend
eine Abwasserhebeanlage (29) mit einer Abwasserförderleitung (30), wobei die Abwasserhebeanlage (29) dazu eingerichtet ist, Abwasser durch die Abwasserförderleitung (30) in Abwasserförderrichtung (31) von einem geodätisch tieferliegenden Niveau hin zu einem geodätisch höherliegenden Entwässerungsniveau zu pumpen,
wobei die Abwasserförderleitung (30) in Abwasserförderrichtung (31) einen Steigleitungsabschnitt (32) aufweist, einen Bogenleitungsabschnitt (33) mit einem Scheitelniveau (N) der Abwasserförderleitung (30), und einen Fallleitungsabschnitt (34), in welchem sich Abwasser in Schwerkraftrichtung bewegt,
das Abwasserhebesystem (28) weiterhin aufweisend einen Rückstauverschluss (1) gemäß einem der vorherigen Ansprüche, wobei der Fallleitungsabschnitt (34) den Rückstauverschluss (1) aufweist.
